# EUROPEAN PATENT SPECIFICATION

(11) **EP 2 851 594 B1**
(45) Date of publication and mention of the grant of the patent: **12.07.2017**
(21) Application number: 13790027.0
(22) Date of filing: 15.05.2013
(51) Int. Cl.: F16K 31/12, F02B 43/00, F16K 17/34, F17C 5/02, F17C 13/00, F17C 13/04, F16K 35/02, B60K 15/03

(54) **VALVE DEVICE, STORAGE SYSTEM FOR LIQUEFIED GAS FUEL, VEHICLE, AND STORAGE METHOD FOR LIQUEFIED GAS FUEL**
VENTILVORRICHTUNG, LAGERSYSTEM FÜR FLÜSSIGGASBRENNSTOFF, FAHRZEUG UND LAGERUNGSVERFAHREN FÜR FLÜSSIGGASBRENNSTOFF
DISPOSITIF DE CLAPET, SYSTÈME DE STOCKAGE POUR COMBUSTIBLE GAZEUX LIQUÉFIÉ, VÉHICULE ET PROCÉDÉ DE STOCKAGE POUR COMBUSTIBLE GAZEUX LIQUÉFIÉ

(30) Priority: 17.05.2012 JP 2012113643
(43) Date of publication of application: 25.03.2015
(73) Proprietor: Isuzu Motors, Ltd., Shinagawa-Ku Tokyo 140-8722 (JP)
(72) Inventor: TOKUMARU,Takeshi, Fujisawa-shi Kanagawa 252-0881 (JP)
(74) Representative: WSL Patentanwälte Partnerschaft mbB
(86) International application number: PCT/JP2013/063502
(87) International publication number: WO 2013/172366

(56) References cited:
- EP-A2- 0 743 485
- JP-A- 2003 314 798
- JP-A- 2007 262 903
- JP-A- 2012 017 774
- JP-U- S4 928 736
- US-A- 4 257 448

## Description

### TECHNICAL FIELD

The present invention relates to a valve device which prevents liquefied gas fuel such as dimethyl ether (hereafter, referred to as DME) from leaking out when the liquefied gas fuel is used, a storage system for liquefied gas fuel including the valve device, a vehicle equipped with the storage system, and a storage method for liquefied gas fuel.

### BACKGROUND ART

Recently, using liquefied gas fuel such as dimethyl ether (DME) as alternative fuel to diesel fuel used in a diesel engine is drawing attention. In a case of filling a vehicle from a filling station, since DME fuel has properties similar to LP gas and is liquefied at about 5 atm at normal temperature, there is employed a pressurized filling method in which the DME is pressurized in the filling station.

However, in a vehicle such as a truck which needs to carry a large amount of fuel, the filling speed is slow and the filling time is long when a differential pressure between the pressure in a fuel tank and the filling pressure of a filling facility is small in the filling by the pressurized filling method. Particularly, in high-temperature conditions such as summer, the pressure in the fuel tank is high and the filling speed becomes even slower in some cases.

In view of this, there is proposed a filling method called pressure balanced filling method in which a vapor phase portion of the fuel tank of the vehicle and a vapor phase portion of a storage tank of a filling station are connected to each other through piping to balance the internal pressure of the fuel tank and the internal pressure of the storage tank (see Patent Document 1 for example).

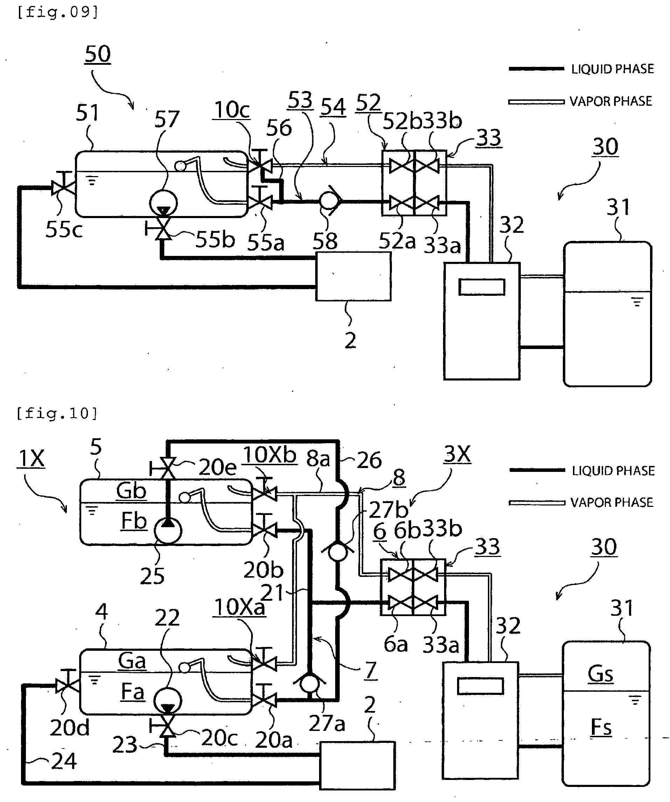

This pressure balanced filling method is described with reference to Fig. 10. A storage system 3X configured to supply DME to an engine 2 of a vehicle 1X includes a main tank (fuel tank) 4, a sub tank (fuel tank) 5, and a coupling (filling device) 6. The coupling 6 is provided with a liquid phase filling port 6a and a vapor phase filling port 6b.

A liquid phase line 7 extends from the liquid phase filling port 6a to branch in the middle, and includes a filling pipe 21 connected to a first liquid phase valve (liquid phase on-off valve) 20a of the main tank 4 and a second liquid phase valve 20b of the sub tank 5, a supply pipe 23 extending from a first pump 22 and connected to the engine 2, a return pipe 24 for returning excess fuel from the engine 2 to the main tank 4, and a replenishment pipe 26 extending from a second pump 25 and connected to the main tank 4. The filling pipe 21 and the replenishment pipe 26 are provided with check valves 27a and 27b, respectively.

A vapor phase line 8 extends from the vapor phase filling port 6b to branch in the middle and is connected to a first vapor phase valve 10Xa of the main tank 4 and a second vapor phase valve 10Xb of the sub tank 5.

In the filling, a nozzle 33 including a liquid phase filling port 33a and a vapor phase filling port 33b which are connected to a meter 32 connected to a storage tank 31 of a filling station 30 is connected to the coupling 6 and the filling is performed with the first vapor phase valve 10Xa, the second vapor phase valve 10Xb, the first liquid phase valve 20a, and the second liquid phase valve 20b being opened.

At this time, since the liquid and vapor phases are together in the coupling 6, vapor phase portions Ga and Gb of the main tank 4 and the sub tank 5 communicate with a vapor phase portion Gs of the storage tank 31 with the filling of the DME. This balances the pressures of the vapor phase portions Ga, Gb, and Gs, and the filling speed of the DME can be increased.

In the case of supplying the DME to the engine 2, the DME is supplied to the engine 2 from the first pump 22 through the supply pipe 23, and the excess fuel is returned from the engine 2 through the return pipe 24. At this time, a third liquid phase valve 20c and a fourth liquid phase valve 20d which are provided respectively in the supply pipe 23 and the return pipe 24 are opened.

When the DME in the main tank 4 is consumed and the main tank 4 is to be replenished with the DME from the sub tank 5, a fifth liquid phase valve 20e of the sub tank 5 and the first liquid phase valve 20a of the main tank 4 are opened, and the main tank 4 is replenished with the DME from the second pump 25 through the replenishment pipe 26.

At this time, the first vapor phase valve 10Xa and the second vapor phase valve 10Xb are opened, and the vapor phase portion Ga of the main tank 4 and the vapor phase portion Gb of the sub tank 5 are thus made to communicate with each other with the replenishment of the DME. This balances the pressures of the vapor phase portions Ga and Gb, and the replenishment speed of the DME can be increased.

Meanwhile, a pipe for liquefied gas fuel such LP gas and DME needs to be provided with a device which prevents a large amount of fuel from leaking out due to fuel pipe breakage caused by accidents and the like. An on-off valve of a fuel tank thus includes an excess flow valve which blocks a flow passage when fuel or gas flows through at a specified flow rate or more.

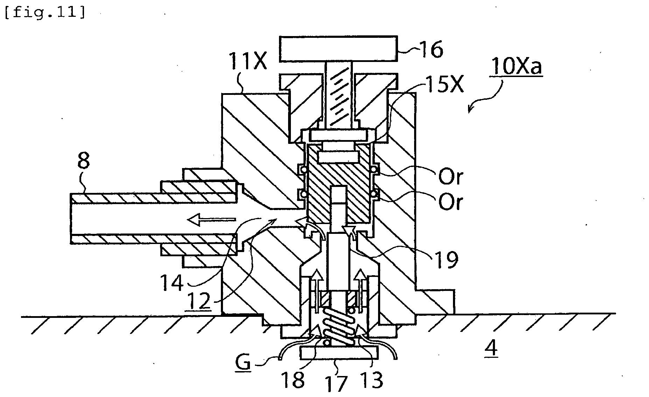

Here, an example of the on-off valve including this excess flow valve is described with reference to Fig. 11. The first vapor phase valve 10Xa includes a flow passage 12 in a housing 11X. A first opening portion 13 of the flow passage 12 is a communication port with the main tank 4, and a second opening portion 14 of the flow passage 12 is a communication port with the vapor phase line 8. Moreover, the first vapor phase valve 10Xa includes a main valve 15X configured to open or block the flow passage 12 and an excess flow valve 17 configured to block the first opening portion 13. A space between the main valve 15X and the housing 11X is sealed by O-rings Or. In addition, the excess flow valve 17 and a fixed shaft (isolation member) 19 are joined to each other.

The excess flow valve 17 has the following structure according to a relationship between a spring 18 disposed in the flow passage 12 and passing resistance of the vapor phase DME flowing through the flow passage 12. The pressure applied to the excess flow valve 17 reaches or exceeds the set pressure of the spring 18 and the excess flow valve 17 blocks the flow passage 12 when the vapor phase DME flows at the specified flow rate or more. When the excess flow valve 17 closes upward in the drawing and blocks the first opening portion 13, the fixed shaft 19 also moves upward.

Moreover, the excess flow valve 17 has the following structure. In a case of reopening the excess flow valve 17, a handle 16 is operated to close the main valve 15X and the main valve 15X is moved downward. This causes the fixed shaft 19 to move downward and the excess flow valve 17 is opened.

However, in the pressure balanced storage system 3X described above, when the nozzle 33 is connected to the coupling 6 in the vehicle and the filling is started, the internal pressures of the main tank 4 and the sub tank 5 are higher than the internal pressure of the storage tank 31 in some cases. In this case, the vapor phase DME in vapor phase line 8 instantly flows from the storage system 3X to the storage tank 31.

This flow of the vapor phase DME to the storage tank 31 at the start of the filling is greater than the specified flow rate and the excess flow valve 17 is closed. Accordingly, the pressures cannot be balanced and the filling speed decreases.

The flow rate at this time and the specified flow rate for preventing leakage due to piping accidents differ too greatly. When the specified flow rate is set to a flow rate required for travelling, the specified flow rate is smaller than the flow rate in the filling. Accordingly, the excess flow valve 17 is activated in the filling and blocks the flow passage 12. Hence, the pressures cannot be balanced and the filling flow rate decreases. Meanwhile, when the specified flow rate is set to the flow rate in the filling, the specified flow rate is greater than the flow rate in piping accidents and the like. Accordingly, pipe leakage due to accidents in travelling cannot be prevented.

Providing pipes and excess flow valves for each purpose is conceivable. However, in this case, the device becomes complicated and the cost increases.

### PRIOR ART DOCUMENT

### PATENT DOCUMENT

Patent Document 1: Japanese patent application Kokai publication No. 2007-262903

### SUMMARY OF THE INVENTION

### PROBLEM TO BE SOLVED BY THE INVENTION

The present invention has been made in view of the problems described above, and an object thereof is to provide a valve device capable of forcedly opening an excess flow valve which prevents a fluid from flowing out at a specified flow rate or more, a storage system for liquefied gas fuel including the valve device, a vehicle equipped with the storage system, and a filling method for liquefied gas fuel.

### MEANS FOR SOLVING THE PROBLEM

A valve device of the present invention for solving the problems described above includes: a flow passage through which fluid in vapor phase flows; a main valve which blocks or opens the flow passage; and an excess flow valve which block the flow passage when the fluid in vapor phase flows from one side to opposite of the flow passage at a predetermined flow rate or more, the valve device configured to include: a pressure chamber into which the fluid in liquid phase flows; and an isolation member which maintains the excess flow valve in an open state by using pressure of the fluid in liquid phase flowing into the pressure chamber.

In this configuration, the pressure of the fluid in liquid phase is made to act on the isolation member by causing the fluid in liquid phase to flow into the pressure chamber when the flow passage through which the fluid in vapor phase flows is desired not to be closed. The excess flow valve can be thereby forcedly set to the open state and be prevented from blocking the flow passage.

The excess flow valve described herein is a device which can prevent the fluid in vapor phase from flowing from the one side to the opposite side of the flow passage at the specified flow rate or more and which allows the fluid in vapor phase to flow from the opposite side to the one side. The excess flow valve can thus prevent a large amount of fluid in vapor phase from leaking out due to piping damage and the like in a system in which the valve device is provided.

Moreover, the valve device described above may further include: a pressure release passage which releases the pressure in the pressure chamber from the pressure chamber to the flow passage; and a pressure release valve which blocks or opens the pressure release passage. In this case, it is possible to release the pressure in the pressure chamber to the flow passage after the excess flow valve is forcedly maintained in the open state, and the excess flow valve can thereby operate normally to block the flow passage. This can easily solve the problem of the excess flow valve not operating which occurs when the pressure remains in the pressure chamber.

In addition, a storage system for liquefied gas fuel of the present invention for solving the problems described above is a storage system for liquefied gas fuel including the valve device described above and is configured to include: at least one fuel tank which stores liquefied gas fuel; a vapor phase line which allows the liquefied gas fuel in vapor phase to flow between the fuel tank and a filling source via the flow passage of the valve device; a liquid phase line which delivers the liquefied gas fuel in liquid phase from the filling source to the fuel tank; and a branching pressure line which guides the liquefied gas fuel in liquid phase from the liquid phase line to the pressure chamber of the valve device when the fuel tank is being filled with the liquefied gas fuel in liquid phase from the filling source.

In this configuration, it is possible to guide the liquefied gas fuel in liquid phase from the branching pressure line to the pressure chamber in the valve device and forcedly open the excess flow valve when the fuel tank is being filled with the liquefied gas fuel from the filling source by using the so-called pressure balanced filling method.

Due to this, the flow passage is not blocked by the excess flow valve even if the internal pressure of the fuel tank is greater than the pressure of the filling source in the start of the filling or during the filling and a large amount of liquefied gas fuel in vapor phase flows from the fuel tank to the filling source. Accordingly, it is possible to prevent reduction of the filling speed and fill the fuel tank with the liquefied gas fuel in a short time.

Furthermore, the aforementioned storage system for liquefied gas fuel preferably includes a control device which opens the pressure release valve after the fuel tank is filled with the liquefied gas fuel in liquid phase from the filling source, until a predetermined determination condition is satisfied.

In addition, a vehicle for solving the problems described above is configured to be equipped with the storage system for liquefied gas fuel described above. This configuration can prevent a large amount of fuel from leaking out by the action of the excess flow valve and also prevent the excess flow valve from operating during the filling work of the fuel to improve the filling speed.

Moreover, a storage method for liquefied gas fuel for solving the problems described above is a storage method for liquefied gas fuel using the valve device described above, characterized in that the method comprises, while at least one fuel tank which stores liquefied gas fuel is filled with the liquefied gas fuel in liquid phase from a filling source and an internal pressure of the filling source and an internal pressure of the fuel tank are balanced by causing the liquefied gas fuel in vapor phase to flow between the fuel tank and the filling source via the flow passage of the valve device, causing the liquefied gas fuel of the liquid phase to flow into the pressure chamber of the valve device to maintain the excess flow valve in the open state with the isolation member by using pressure of the liquefied gas fuel in liquid phase flowing into the pressure chamber.

In this method, the liquefied gas fuel of the liquid phase is made to flow into the pressure chamber of the valve device to maintain the excess flow valve of the valve device in the open state, and the excess flow valve is thus not closed when the pressures of vapor phase portions of the liquefied gas fuel are balanced. Accordingly, the filling time of the liquefied gas fuel can be reduced in a simple method.

In addition, in the aforementioned storage method for liquefied gas fuel, it is preferable that the pressure release valve is opened to reduce the pressure in the pressure chamber after the fuel tank is filled with the liquefied gas fuel from the filling source, until the a predetermined determination condition is satisfied.

### EFFECTS OF THE INVENTION

In the present invention, the excess flow valve can prevent the fluid from leaking out at the specified flow rate or more, and the excess flow valve can be forcedly opened. Particularly, in the storage system for liquefied gas fuel, it is possible to suppress reduction of the filling speed and reduce the time required for filling of the liquefied gas fuel by forcedly opening the excess flow valve during the filling.

### BRIEF DESCRIPTION OF THE DRAWINGS

[Fig. 1] Fig. 1 is a schematic view showing a storage system for liquefied gas fuel in a first embodiment of the present invention.
[Fig. 2] Fig. 2 is an enlarged cross-sectional view showing a valve device in Fig. 1 and shows a state where an excess flow valve is forcedly opened.
[Fig. 3] Fig. 3 is an enlarged cross-sectional view showing the valve device in Fig. 1 and shows a state where pressure in a pressure chamber is released.
[Fig. 4] Fig. 4 is a flowchart showing a method of controlling a solenoid valve in a case of releasing the pressure in the pressure chamber of the valve device shown in Fig. 3.
[Fig. 5] Fig. 5 is an enlarged cross-sectional view showing the valve device in Fig. 1 and shows a state where the excess flow valve is closed.
[Fig. 6] Fig. 6 is an enlarged cross-sectional view showing the valve device in Fig. 1 and shows a state where a main valve is closed.
[Fig. 7] Fig. 7 shows a state where tanks are filled with liquefied gas fuel from an external storage tank of the storage system for liquefied gas fuel in the first embodiment of the present invention.
[Fig. 8] Fig. 8 shows a state where one fuel tank is replenished with the liquefied gas fuel from another fuel tank in the storage system for liquefied gas fuel in the first embodiment of the present invention.
[Fig. 9] Fig. 9 is a schematic view showing a storage system for liquefied gas fuel in a second embodiment of the present invention.
[Fig. 10] Fig. 10 is a schematic view showing a conventional storage system for liquefied gas fuel.
[Fig. 11] Fig. 11 is an enlarged cross-sectional view showing a valve device in Fig. 10.

### MODES FOR CARRYING OUT THE INVENTION

A valve device of an embodiment of the present invention, a storage system for liquefied gas fuel including the valve device, a vehicle equipped with the storage system, and a method of controlling the storage system are described below with reference to the drawings. In the embodiment, description is given of a vehicle using dimethyl ether (hereafter, referred to as DME) as the liquefied gas fuel. However, the present invention can be applied to a case of using, for example, liquefied petroleum gas (LPG), liquefied natural gas (LNG), liquefied butane gas (LBG), liquefied hydrogen fuel, or the like.

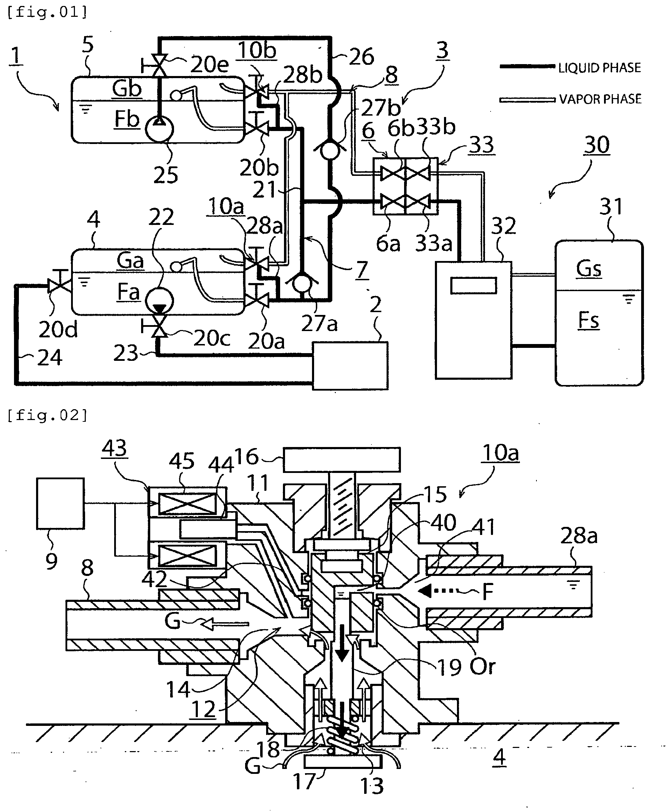

First, a vehicle equipped with a storage system for liquefied gas fuel in a first embodiment of the present invention is described with reference to Fig. 1. As shown in Fig. 1, this storage system 3 includes a first vapor phase valve (valve device) 10a and a second vapor phase valve (valve device) 10b instead of the first vapor phase valve 10Xa and the second vapor phase valve 10Xb of the conventional storage system 3X in Fig. 10. Moreover, the storage system 3 includes a first branching pressure line 28a configured to guide liquid phase DME from a filling pipe 21 to the first vapor phase valve 10a and a second branching pressure line 28b configured to guide the Liquid phase DME from the filling pipe 21 to the second vapor phase valve 10b.

As shown in Fig. 2, the first vapor phase valve 10a (since the second vapor phase valve 10b has the same configuration, description thereof omitted) includes a pressure chamber 40, a pressure opening portion 41, a pressure release passage 42, and a solenoid valve (pressure release valve) 43, in addition to the configuration of the conventional first vapor phase valve 10Xa in Fig. 11.

The first vapor phase valve 10a in the first embodiment of the present invention is provided in a storage system 3 including: a liquid phase line 7 which delivers the liquid phase DME; and a vapor phase line 8 through which vapor phase portions Ga, Gb, and Gs respectively of tanks 4 and 5 and a storage tank 31 communicate with each other, the storage system 3 being a so-called pressure balanced type in which the pressures of the vapor phase portions Ga, Gb, and Gs are balanced in the filling of the DME. The first vapor phase valve 10a has the following configuration.

The first vapor phase valve 10a includes a flow passage 12 through which the vapor phase portion Ga of the main tank 4 and the vapor phase line 8 communicates with each other and through which vapor phase DME flows and a main valve 15 which blocks or opens the flow passage 12, as well as an excess flow valve 17 which blocks the flow passage 12 when the vapor phase DME flows from a first opening portion 13 to a second opening portion 14 of the flow passage 12 at a specified flow rate or more. In addition to this configuration, the first vapor phase valve 10a includes the pressure chamber 40 which communicates with the first branching pressure line 28a branching from the liquid phase line 7 and into which the liquid phase DME flows and a fixed shaft (isolation member) 19 which maintains the excess flow valve 17 in an open state by using the pressure of the liquid phase DME flowing into the pressure chamber 40.

The pressure chamber 40 is provided in the main valve 15, on the axis of the fixed shaft (isolation member) 19 connected to the excess flow valve 17. The fixed shaft 19 operates in an up-down direction in the drawing, and one end of the fixed shaft 19 is joined to the excess flow valve 17 while the other end is disposed in pressure chamber 40 in such a way that the pressure in the pressure chamber 40 acts on the other end.

Due to this configuration, when the liquid phase DME flows through the filling pipe 21 in filling with the liquid phase DME from the storage tank 31 or replenishment with the liquid phase DME from the sub tank 5, the liquid phase DME flows into the pressure chamber 40 from the first branching pressure line 28a. The pressure of the liquid phase DME in the pressure chamber 40 thus acts on the fixed shaft 19 and force in a downward direction in the drawing can be applied to the fixed shaft 19.

Since the fixed shaft 19 is pushed by the pressure, the excess flow valve 17 is not activated and the open state can be maintained even when the vapor phase DME flows at the specified flow rate or more at which the excess flow valve 17 is to be closed.

The pressure release passage 42 is a flow passage through which the pressure chamber 40 and the flow passage 12 communicate with each other, specifically, is a flow passage through which the pressure chamber 40 and the vapor phase line 8 communicate with each other via a gap between O-rings Or between the main valve 15 and a housing 11. Moreover, the solenoid valve 43 is provided in the middle of the pressure release passage 42. The solenoid valve 43 is formed of a plunger 44 and an electromagnet 45. The solenoid valve 43 is normally closed and is opened to open the pressure release passage 42 by an ECU (control device) 9 when the power is ON.

Due to this configuration, when pressure is built up in the pressure chamber 40, it is possible to release the pressure in the pressure chamber 40 by opening the solenoid valve 43 and shift the state of the excess flow valve 17 from the open state to the activated state.

Next, operations of the first vapor phase valve 10a are described with reference to Figs. 2 to 6. Here, the outlined arrows in the drawing show the flow of vapor phase DME, the solid arrows show an operation of the fixed shaft 19, and the dotted arrow shows the flow of liquid phase DME.

As shown in Fig. 2, in the case where the main tank 4 is filled with the DME from the storage tank 31 or is replenished with the DME from the sub tank 5, the liquid phase DME flows into the pressure chamber 40 from the liquid phase line 7 through the first branching pressure line 28a. Since the pressure of the liquid phase DME flowing into the pressure chamber 40 acts on the fixed shaft 19, the excess flow valve 17 can be maintained in the open state.

Due to this, the excess flow valve 17 is not closed in the filling or replenishment of the DME. Accordingly, it is possible to increase the filling or replenishment speed and reduce the filling or replenishment time.

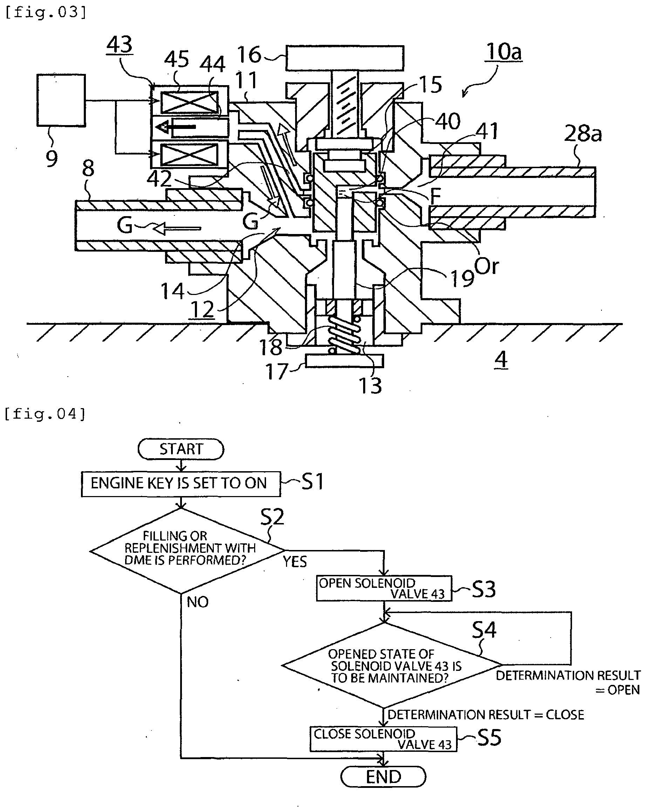

As shown in Fig. 3, after the main tank 4 is filled with the DME from the storage tank 31 or is replenished with the DME from the sub tank 5, the solenoid valve 43 is activated to open the pressure release passage 42 and cause the pressure chamber 40 and the vapor phase line 8 to communicate with each other. The pressure in the pressure chamber 40 can be thus released to the vapor phase line 8.

At this time, the pressure in the pressure chamber 40 is greater than the pressure in vapor phase line 8. Accordingly, when the pressure chamber 40 and the vapor phase line 8 communicate with each other, the liquid phase DME turns into the vapor phase DME due to this pressure difference, and the pressure is released from the pressure chamber 40 to the vapor phase line 8. This can suppress a case where the excess flow valve 17 does not operate while the vehicle is travelling which occurs when the pressure remains in the pressure chamber 40.

An example of the control of the solenoid valve 43 is described with reference to the flowchart shown in Fig. 4. Step S1 is performed in which an engine key is set to ON (hereafter, referred to as key ON) at the start of an engine 2. Next, step S2 is performed in which the ECU 9 determines whether the tank 4 has been filled or replenished with the DME. When the ECU 9 determines in step S2 that the tank has been filled or replenished with the DME, step S3 is performed in which the ECU 9 causes an electric current to flow to the solenoid valve 43 and opens the solenoid valve 43. When step S3 is performed, the solenoid valve 43 is opened and the pressure in the pressure chamber 40 is released to the vapor phase line 8.

Next, step S4 is performed in which the ECU 9 determines whether to maintain the open state of the solenoid valve 43. In step S4, the ECU 9 determines whether to maintain the open state of the solenoid valve 43 by determining whether a predetermined determination condition is satisfied. The predetermined determination condition is satisfied when the pressure in the pressure chamber 40 falls to such a level that the excess flow valve 17 can block the flow passage 12 if the vapor phase DME flows through the flow passage 12 at the specific flow rate or more.

For example, there is used a method in which elapse of a predetermined power-on time is used as the condition and the ECU 9 determines to close the solenoid valve 43 after the elapse of the predetermined power-on time. To be more specific, there is used a method in which, after three to five seconds elapses from the key ON, the ECU 9 determines that the pressure in the pressure chamber 40 is sufficiently released and the solenoid valve 43 is to be closed. Alternatively, there is used a method in which the ECU 9 determines to close the solenoid valve 43 when the pressure in the pipe of the liquid phase line 7 becomes equal to the pressure in the main tank 4.

When the ECU 9 determines in step S4 not to maintain the open state of the solenoid valve 43, i.e. to close the solenoid valve 43, the step S5 is performed next in which the ECU 9 cuts the supply of electric current to the solenoid valve 43 to close the solenoid valve 43, and this control method is terminated.

In this control method, since the pressure built up in the pressure chamber 40 can be released in the key ON, the excess flow valve 17 can be made to operate while the vehicle is travelling. Hence, if a large amount of vapor phase DME flows, it is possible to block the flow passage 12 and prevent leakage of the DME.

In this control method of the solenoid valve 43, it is only necessary to reduce the pressure in the pressure chamber 40 and allow the excess flow valve 17 to operate. For example, the control method may be such that step S2 is omitted and the solenoid valve 43 is turned on simultaneously with the key ON. Moreover, in step S4, it is only necessary to determine whether the pressure in the pressure chamber 40 is sufficiently reduced, specifically, is reduced to such a pressure that the excess flow valve 17 can operate, and step S4 is not limited to the methods described above.

In addition, although the key ON is used as a trigger for activating the solenoid valve 43, the solenoid valve 43 may be configured to be activated when the pressure in the pressure chamber 40 is high. In this case, the pressure in the pressure chamber 40 can be released while the vehicle is travelling, for example, after the main tank 4 is replenished with the DME from the sub tank 5 while the vehicle is travelling.

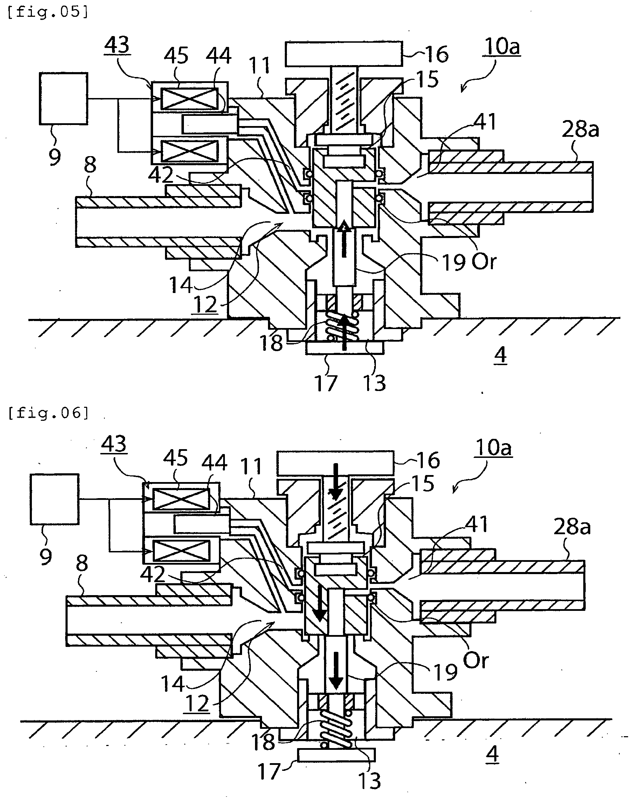

When the pressure is released from the pressure chamber 40, as shown in Fig. 5, the operation of the excess flow valve 17 is made possible. In cases other than the case where the main tank 4 is filled with the DME from the storage tank 31 or is replenished with the DME from the sub tank 5, there is no flow of the liquid phase DME in liquid phase line 7. Accordingly, no liquid phase DME flows into the pressure chamber 40 through the first branching pressure line 28a, and the pressure in the pressure chamber 40 thus does not increase. Hence, if the vapor phase DME flows at the specified flow rate or more, the excess flow valve 17 is closed and blocks the flow passage 12. This can prevent a case where a large amount of DME leaks out due to piping damage or the like.

As shown in Fig. 6, when the excess flow valve 17 is closed and the storage system 3 needs a repair or when maintenance of the vehicle 1 is to be performed, a handle 16 is turned to cause the main valve 15 to operate and thereby block the flow passage 12. At this time, the fixed shaft 19 is pushed by the main valve 15 and sets the excess flow valve 17 to the open state. Even when the excess flow valve 17 is set to the open state, the vapor phase DME does not flow because the main valve 15 blocks the flow passage 12.

Due to this, it is possible to return the excess flow valve 17 to its normal position and also prevent a case where the vapor phase DME flows in the maintenance of the vehicle and the like.

Note that the present invention can be used for a valve device including a conventional excess flow valve. For example, the present invention can be applied to an on-off valve in which the excess flow valve 17 is internally disposed. Moreover, the embodiment is described by giving an example in which the first vapor phase valve 10a is configured such that the main valve 15 is closed by manually rotating the handle 16. However, the main valve 15 may be configured to be opened and closed by, for example, a solenoid valve.

In addition, in the embodiment, first to fifth liquid phase valves 20a to 20e each have a structure which includes no excess flow valve 17 of the conventional first vapor phase valve 10Xa shown in Fig. 11. However, the present invention is not limited to this and the first to fifth liquid phase valves 20a to 20e may be any valve devices which are openable and closable.

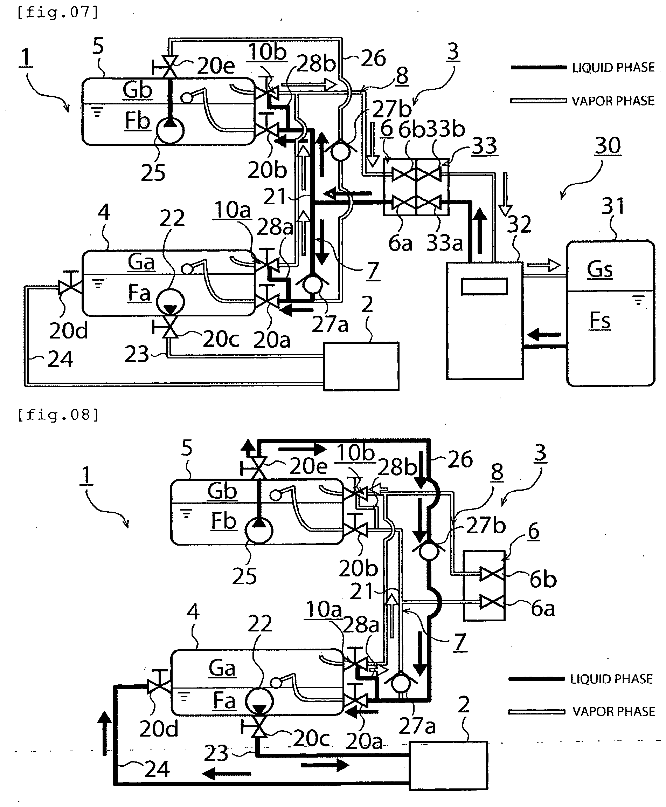

Next, operations of the storage system 3 including the aforementioned first vapor phase valve 10a are described with reference to Figs. 7 and 8. Here, the outlined arrows show the flow of the vapor phase DME and the solid arrows show the flow of the liquid phase DME.

In a case where the main tank 4 is to be filled with the DME from the storage tank 31, a nozzle 33 is first connected to a coupling 6 as shown in Fig. 7. The coupling 6 is configured such that a flow passage is opened when the nozzle 33 is connected and the flow passage is blocked when the nozzle 33 is not connected. Moreover, the coupling 6 is configured such that the liquid phase line 7 and the vapor phase line 8 are simultaneously connected to a filling station 30 when the nozzle 33 is connected.

Each of the valves 10a, 10b, and 20a to 20e is normally opened except for the case where the excess flow valve 17 is closed and the storage system 3 needs to be repaired and the case where the maintenance of the vehicle is to be performed. When the coupling 6 and the nozzle 33 are connected to each other, the vapor phase portions Ga, Gb, and Gs communicate with each other through the first vapor phase valve 10a of the main tank 4 and the second vapor phase valve 10b of the sub tank 5. Moreover, liquid phase portions Fa, Fb, and Fs communicate with each other through the first liquid phase valve 20a of the main tank 4 and the second liquid phase valve 20b of the sub tank 5.

When the liquid phase DME is pressurized by a not-illustrated pump and the filling of the main tank 4 and the sub tank 5 from the filling station 30 is started, the main tank 4 and the sub tank 5 are filled with the liquid phase DME supplied through the liquid phase line 7. At this time, the pressures of the vapor phase portions Ga, Gb, and Gs are balanced by the vapor phase line 8.

At this time, the filling pressure is applied to the pressure chamber 40 of the first vapor phase valve 10a from the first branching pressure line 28a and to the pressure chamber 40 of the second vapor phase valve 10b from the second branching pressure line 28b. Then, as described in Fig. 2, the excess flow valve 17 of the first vapor phase valve 10a and the excess flow valve 17 of the second vapor phase valve 10b are fixed to the open state.

Fixing the excess flow valves 17 to the open state while the tanks 4 and 5 are filled with the DME from the filling station 30 can prevent the case where the excess flow valves 17 are closed during the filling of the DME, thereby causing reduction of the filling flow rate and reduction of the filling speed of the DME, which is the problem in the conventional technique, and reduce the filling time of the DME.

When the key is set to ON to start the vehicle after the filling of the DME from the filling station 30 is completed, the solenoid valves 43 are activated as described in Fig. 3 to release the pressure built up in the pressure chambers 40 of the first vapor phase valve 10a and the second vapor phase valve 10b during the filling of the DME, and the excess flow valves 17 are set to an operable state.

As shown in Fig. 8, the DME is supplied from the main tank 4 to the engine 2 by a first pump 22 while the vehicle is travelling. At this time, excess fuel is returned from the engine 2 to the main tank 4.

When the DME in the main tank 4 is consumed, a second pump 25 replenishes the main tank 4 with the DME from the sub tank 5. At this time, since the first vapor phase valve 10a and the second vapor phase valve 10b are opened, the internal pressures of the main tank 4 and the sub tank 5 are balanced, i.e. the pressures of the vapor phase portions Ga and Gb are balanced.

At this time, as described above, the filling pressure is applied to the pressure chamber 40 of the first vapor phase valve 10a from the first branching pressure line 28a, and the excess flow valve 17 of the first vapor phase valve 10a is maintained in the open state. Meanwhile, in the second vapor phase valve 10b, the vapor phase DME flows from the vapor phase line 8 to the sub tank 5, i.e. from the second opening portion 14 to the first opening portion 13. Accordingly, the excess flow valve 17 is not closed.

Due to this, also in the case where the main tank 4 is replenished with the DME from the sub tank 5, the main tank 4 can be replenished with the DME from the sub tank 5 without reduction of the replenishment speed. Moreover, in the case where the main tank 4 is replenished with the DME from the sub tank 5, it is preferable to open the solenoid valve 43 of the first vapor phase valve 10a after the replenishment to release the pressure in the pressure chamber 40 of the first vapor phase valve 10a.

According to the operation described above, in the filling with the DME from the storage tank 31 or the replenishment with the DME from the sub tank 5, the excess flow valve 17 of the tank (in the case of filling, the main tank 4 and the sub tank 5, in the case of replenishment, the main tank 4) which is filled or replenished with the DME receives the filling pressure and is forcedly opened. Accordingly, even when the internal pressure of the tank becomes greater than the pressure of the supply side during the filling, the flow passage 12 is not blocked by the excess flow valve 17. Hence, it is possible to avoid reduction of the filling speed or the replenishment speed and reduce the filling time or the replenishment time.

Moreover, since the operations and effects described above can be obtained in a simple configuration by a simple method, problems occurring in the case where the DME is used as fuel of a vehicle can be solved at a low cost.

In addition, since the solenoid valve 43 is configured to be turned on with the key ON after the filling or replenishment of the DME is completed and to be turned off after the pressure in the pressure chamber 40 is released, the excess flow valve 17 can be operate normally after the filling or replenishment of the DME is completed. Hence, it is possible to prevent a case where a large amount of DME leaks out due to piping breakage.

Next, a storage system for liquefied gas fuel in a second embodiment of the present invention is described with reference to Fig. 9. This storage system 50 has a configuration including only the main tank 4 of the storage system 3 in the first embodiment, and includes a fuel tank 51, a coupling 52, a liquid phase line 53, and a vapor phase line 54. Moreover, the storage system 50 includes, in the fuel tank 51, liquid phase valves 55a to 55c and a third vapor phase valve 10c having the same configuration as the first vapor phase valve 10a described above. Furthermore, the storage system 50 includes a third branching pressure line 56 which branches from the liquid phase line 53 to extend to the third vapor phase valve 10c. The storage system 50 operates in the same way as the aforementioned storage system 3, except that replenishment cannot be performed while the vehicle is travelling.

The vehicle 1 equipped with the storage system 3 or 50 for liquefied gas fuel in the first or second embodiment of the present invention can prevent a large amount of DME from leaking out by the action of the excess flow valve 17 and also prevent the excess flow valve 17 from operating during the filling work of the DME to improve the filling speed. The storage system 3 or 50 is particularly preferably applied to a case of filling a large-capacity fuel tank provided in a large truck capable of travelling for a long distance.

### INDUSTRIAL APPLICABILITY

In the valve device of the present invention, the excess flow valve can prevent fluid from leaking out at a specified flow rate or more, and the excess flow valve can be forcedly opened when the action thereof is not required. Particularly, in the storage system for liquefied gas fuel, it is possible to suppress reduction of the filling speed and reduce the time required for filling of the liquefied gas fuel by forcedly opening the excess flow valve during the filling. The present invention can be thus utilized in a vehicle equipped with an engine using liquefied gas fuel such as DME.

### EXPLANATION OF REFERENCE NUMERALS

- 1: Vehicle
- 2: Engine (internal combustion engine)
- 3: Storage system
- 4: Main tank (fuel tank)
- 5: Sub tank (fuel tank or filling source)
- 6: Coupling (filling port)
- 7: Liquid phase line
- 8: Vapor phase line
- 9: ECU (control device)
- 10a: First vapor phase valve (valve device)
- 10b: Second vapor phase valve (valve device)
- 11: Housing
- 12: Flow passage
- 13: First opening portion
- 14: Second opening portion
- 15: Main valve
- 16: Handle
- 17: Excess flow valve
- 18: Spring (biasing member)
- 19: Fixed shaft (isolation member)
- 20a to 20e: First liquid phase valve to fifth liquid phase valve
- 21: Filling pipe
- 22: First pump
- 23: Supply pipe
- 24: Return pipe
- 25: Second pump
- 26: Replenishment pipe
- 27a, 27b: Check valve
- 28a: First branching pressure line
- 28b: Second branching pressure line
- 30: Filling station
- 31: Storage tank (filling source)
- 32: Meter
- 33: Nozzle
- 40: Pressure chamber
- 41: Pressure opening portion
- 42: Pressure release passage
- 43: Solenoid valve (pressure release valve)

## Claims

1. A valve device including: a flow passage through which fluid in vapor phase flows; a main valve which blocks or opens the flow passage; and an excess flow valve which block the flow passage when the fluid in vapor phase flows from one side to opposite side of the flow passage at a predetermined flow rate or more, **characterized in that** the valve device comprises:
a pressure chamber into which the fluid in liquid phase flows; and
an isolation member which maintains the excess flow valve in an open state by using pressure of the fluid in liquid phase flowing into the pressure chamber.

2. The valve device according to claim 1, **characterized in that** the valve device further comprises:
a pressure release passage which releases the pressure in the pressure chamber from the pressure chamber to the flow passage; and
a pressure release valve which blocks or opens the pressure release passage.

3. A storage system for liquefied gas fuel including the valve device according to claim 1 or 2, **characterized in that** the storage system comprises:
at least one fuel tank which stores liquefied gas fuel;
a vapor phase line which allows the liquefied gas fuel in vapor phase to flow between the fuel tank and a filling source via the flow passage of the valve device;
a liquid phase line which delivers the liquefied gas fuel in liquid phase from the filling source to the fuel tank; and
a branching pressure line which guides the liquefied gas fuel in liquid phase from the liquid phase line to the pressure chamber of the valve device when the fuel tank is being filled with the liquefied gas fuel in liquid phase from the filling source.

4. The storage system for liquefied gas fuel according to claim 3, **characterized in that** the storage system further comprises a control device which opens the pressure release valve after the fuel tank is filled with the liquefied gas fuel in liquid phase from the filling source, until a predetermined determination condition is satisfied.

5. A vehicle equipped with the storage system for liquefied gas fuel according to claim 3 or 4.

6. A storage method for liquefied gas fuel using the valve device according to claim 1 or 2, **characterized in that** the storage method comprises
while at least one fuel tank which stores liquefied gas fuel is filled with the liquefied gas fuel in liquid phase from a filling source and an internal pressure of the filling source and an internal pressure of the fuel tank are balanced by causing the liquefied gas fuel in vapor phase to flow between the fuel tank and the filling source via the flow passage of the valve device,
causing the liquefied gas fuel of the liquid phase to flow into the pressure chamber of the valve device to maintain the excess flow valve in the open state with the isolation member by using pressure of the liquefied gas fuel in liquid phase flowing into the pressure chamber.

7. The storage method for liquefied gas fuel according to claim 6, **characterized in that** the pressure release valve is opened to reduce the pressure in the pressure chamber after the fuel tank is filled with the liquefied gas fuel from the filling source, until a predetermined determination condition is satisfied.

## Patentansprüche

1. Ventilvorrichtung, welche aufweist: einen Strömungskanal, durch welchen Flüssigkeit in Dampfphase fließt, ein Hauptventil, welches den Strömungskanal öffnet oder blockiert, und ein Überströmventil, welches den Strömungskanal blockiert, wenn die Flüssigkeit in der Dampfphase von einer Seite zu der gegenüberliegenden Seite des Strömungskanals mit einer vorbestimmten Flussrate oder größer fließt, **dadurch gekennzeichnet, dass** die Ventilvorrichtung aufweist:
eine Druckkammer, in welche die Flüssigkeit in der Flüssigphase fließt, und
ein Trennelement, welches das Überströmventil offen hält, indem Druck der Flüssigkeit in der Flüssigphase, welche in die Druckkammer fließt, angewendet wird.

2. Ventilvorrichtung nach Anspruch 1, **dadurch gekennzeichnet, dass** die Ventilvorrichtung weiterhin aufweist:
einen Druckfreigabekanal, welcher den Druck in der Druckkammer von der Druckkammer an den Strömungskanal freigibt, und
ein Druckfreigabeventil, welches den Druckfreigabekanal öffnet oder blockiert.

3. Speichersystem für verflüssigten Gasbrennstoff mit der Ventilvorrichtung nach Anspruch 1 oder 2, **dadurch gekennzeichnet, dass** das Speichersystem aufweist:
mindestens einen Brennstofftank, welcher verflüssigten Gasbrennstoff speichert,
eine Dampfphasenleitung, welche es dem verflüssigten Gasbrennstoff in der Dampfphase ermöglicht, zwischen dem Brennstofftank und einer Füllquelle durch den Strömungskanal der Ventilvorrichtung zu fließen,
eine Flüssigphasenleitung, welche den verflüssigten Gasbrennstoff in der Flüssigphase von der Füllquelle zu dem Brennstofftank transportiert, und
eine abzweigende Druckleitung, welche den verflüssigten Gasbrennstoff in der Flüssigphase von der Flüssigphasenleitung zu der Druckkammer der Ventilvorrichtung leitet, wenn der Brennstofftank mit dem verflüssigten Gasbrennstoff in der Flüssigphase von der Füllquelle befüllt wird.

4. Speichersystem für verflüssigten Gasbrennstoff nach Anspruch 3, **dadurch gekennzeichnet, dass** das Speichersystem weiterhin eine Steuervorrichtung aufweist, welche das Druckfreigabeventil öffnet, nachdem der Brennstofftank mit dem verflüssigten Gasbrennstoff in der Flüssigphase durch die Füllquelle befüllt wurde, bis ein vorbestimmter Bestimmungszustand erfüllt wird.

5. Fahrzeug, welches mit dem Speichersystem für verflüssigten Gasbrennstoff nach Anspruch 3 oder 4 ausgestattet ist.

6. Speicherverfahren für verflüssigten Gasbrennstoff, welches die Ventilvorrichtung nach Anspruch 1 oder 2 verwendet, **dadurch gekennzeichnet, dass** das Speicherverfahren aufweist,
dass während mindestens ein Brennstofftank, welcher verflüssigten Gasbrennstoff speichert, mit dem verflüssigten Gasbrennstoff in der Flüssigphase durch eine Füllquelle befüllt wird, ein innerer Druck der Füllquelle und ein innerer Druck des Brennstofftanks ausgeglichen sind, indem der verflüssigte Gasbrennstoff in der Dampfphase dazu veranlasst wird zwischen dem Brennstofftank und der Füllquelle durch den Strömungskanal der Ventilvorrichtung zu fließen,
dass der verflüssigte Gasbrennstoff in der Flüssigphase dazu veranlasst wird in die Druckkammer der Ventilvorrichtung zu fließen, um das Überströmventil mit Hilfe des Trennelements offen zu halten, indem Druck des verflüssigten Gasbrennstoffs in der Flüssigphase, welcher in die Druckkammer fließt, verwendet wird.

7. Speicherverfahren für verflüssigten Gasbrennstoff nach Anspruch 6, **dadurch gekennzeichnet, dass** das Druckfreigabeventil geöffnet wird, um den Druck in der Druckkammer, nachdem der Brennstofftank mit dem verflüssigten Gasbrennstoff durch die Füllquelle befüllt wurde, zu reduzieren, bis ein vorbestimmter Bestimmungszustand erfüllt wird.

## Revendications

1. Un dispositif de clapet incluant : un passage d'écoulement au travers duquel s'écoule du fluide en phase vapeur ; un clapet principal qui bloque ou ouvre le passage d'écoulement ; et un clapet de limitation de débit qui bloque le passage d'écoulement lorsque le fluide en phase vapeur s'écoule d'un côté à un côté opposé du passage d'écoulement à un débit d'écoulement prédéterminé ou plus, **caractérisé en ce que** le dispositif de clapet comprend :
une chambre de pression dans laquelle s'écoule le fluide en phase liquide ; et
un élément d'isolement qui maintient le clapet de limitation de débit dans un état ouvert en utilisant la pression du fluide en phase liquide qui s'écoule dans la chambre de pression.

2. Le dispositif de clapet selon la revendication 1, **caractérisé en ce que** le dispositif de clapet comprend en sus :
un passage de libération de pression qui libère la pression dans la chambre de pression de la chambre de pression au passage d'écoulement ; et
un clapet de libération de pression qui bloque ou ouvre le passage de libération de pression.

3. Un système de stockage pour du carburant gazeux liquéfié incluant le dispositif de clapet selon la revendication 1 ou la revendication 2, **caractérisé en ce que** le système de stockage comprend :
au moins un réservoir de carburant qui stocke du carburant gazeux liquéfié ;
une conduite de phase vapeur qui permet au carburant gazeux liquéfié en phase vapeur de s'écouler entre le réservoir de carburant et une source de remplissage via le passage d'écoulement du dispositif de clapet ;
une conduite de phase liquide qui délivre le carburant gazeux liquéfié en phase liquide de la source de remplissage au réservoir de carburant ; et
une conduite de pression en dérivation qui guide le carburant gazeux liquéfié en phase liquide de la conduite de phase liquide à la chambre de pression du dispositif de clapet lorsque le réservoir de carburant est en cours de remplissage avec le carburant gazeux liquéfié en phase liquide provenant de la source de remplissage.

4. Le système de stockage pour du carburant gazeux liquéfié selon la revendication 3, **caractérisé en ce que** le système de stockage comprend en sus un dispositif de contrôle qui ouvre le clapet de libération de pression une fois que le réservoir de carburant est rempli avec le carburant gazeux liquéfié en phase liquide provenant de la source de remplissage, jusqu'à ce qu'une condition de détermination prédéterminée soit satisfaite.

5. Un véhicule équipé du système de stockage pour du carburant gazeux liquéfié selon la revendication 3 ou la revendication 4.

6. Un procédé de stockage pour du carburant gazeux liquéfié utilisant le dispositif de clapet selon la revendication 1 ou la revendication 2, **caractérisé en ce que** le procédé de stockage comprend,
pendant qu'au moins un réservoir de carburant qui stocke du carburant gazeux liquéfié est rempli avec le carburant gazeux liquéfié en phase liquide provenant d'une source de remplissage et qu'une pression interne de la source de remplissage et une pression interne du réservoir de carburant sont équilibrées en amenant le carburant gazeux liquéfié en phase vapeur à s'écouler entre le réservoir de carburant et la source de remplissage via le passage d'écoulement du dispositif de clapet,
le fait d'amener le carburant gazeux liquéfié de la phase liquide à s'écouler dans la chambre de pression du dispositif de clapet afin de maintenir le clapet de limitation de débit dans l'état ouvert avec l'élément d'isolement en utilisant la pression du carburant gazeux liquéfié en phase liquide qui s'écoule dans la chambre de pression.

7. Le procédé de stockage pour du carburant gazeux liquéfié selon la revendication 6, **caractérisé en ce que** le clapet de libération de pression est ouvert afin de réduire la pression dans la chambre de pression une fois que le réservoir de carburant est rempli avec le carburant gazeux liquéfié provenant de la source de remplissage, jusqu'à ce qu'une condition de détermination prédéterminée soit satisfaite.
